# FASCICULE DE BREVET EUROPEEN

(11) **EP 2 547 554 B1**
(45) Date de publication et mention de la délivrance du brevet: **01.05.2019**
(21) Numéro de dépôt: 11715574.7
(22) Date de dépôt: 11.03.2011
(51) Int. Cl.: B60R 16/00, B60R 16/023

(54) **DISPOSITIF DE COMMUTATION POUR HAUT DE COLONNE DE DIRECTION DE VÉHICULE AUTOMOBILE**
SCHALTVORRICHTUNG FÜR EINE FAHRZEUGLENKSÄULE
SWITCHING DEVICE FOR STEERING COLUMN OF A VEHICLE

(30) Priorité: 16.03.2010 FR 1001052
(43) Date de publication de la demande: 23.01.2013
(73) Titulaire: SC2N, 94046 Creteil Cedex (FR)
(72) Inventeur: HALLET, Michel, F-14320 Clinchamps-sur-Orne (FR)
(74) Mandataire: Pothmann, Karsten
(86) Numéro de dépôt international: PCT/FR2011/000130
(87) Numéro de publication internationale: WO 2011/114015

(56) Documents cités:
- WO-A1-2010/000859
- US-A1- 2002 167 494

## Description

L'invention concerne un dispositif de commutation pour haut de colonne de direction de véhicule automobile et l'ensemble de commande pour haut de colonne de direction de véhicule automobile associé.

Un ensemble de commande pour haut de colonne de direction comprend généralement une pluralité de commutateurs accessibles à un utilisateur du véhicule. L'utilisateur actionne ainsi des fonctions, telles que l'allumage des phares ou des feux de brouillard, en changeant la position d'un des commutateurs.

Il est connu d'utiliser un microcontrôleur configuré pour activer périodiquement la lecture des états de commutation des modules. Il est aussi connu d'utiliser un montage où plusieurs sorties de signal d'un microcontrôleur sont reliées à une unique entrée de signal, et où plusieurs entrées de signal dudit microcontrôleur sont reliées à une même sortie. Chaque commutateur est alors repéré par un couple entrée/sortie de signal du microcontrôleur qui lui est propre.

Ce montage, appelé matrice numérique, permet d'augmenter le nombre de commutateurs dont l'état devient accessible au microcontrôleur sans augmenter le nombre d'entrées et de sorties de signal dudit microcontrôleur, et donc le prix de ce composant. En effet, pour un nombre donné d'entrées de signal et de sorties de signal du microcontrôleur, le nombre de possibilités de codage est très élevé.

Le document EP 0 147 110 divulgue pour un volant multifonctions comportant un microcontrôleur l'utilisation d'un tel montage, comme on le voit notamment sur la figure 6 de ce document.

Ledit montage en matrice numérique comporte cependant le risque que si un commutateur est bloqué en position fermée, le signal émanant d'une sortie de signal peut être amené à une entrée autre que celles correspondant à la disposition des commutateurs. De la sorte, il peut y avoir une interprétation erronée de ladite disposition des commutateurs, et donc une réponse inadaptée des équipements du véhicule.

Par exemple, en considérant la figure 6 de EP 0 147 110, si le commutateur "essuie-glace éteints" ("wipers off') relié à l'entrée 7 et à la sortie de signal 21 se trouve en position fermée suite à un faux contact, et que l'utilisateur ferme simultanément les commutateurs "reprise du régulateur de vitesse" ("cruise resume"), relié à l'entrée 7 et à la sortie de signal 22, et "feux éteints" ("lights off"), relié à l'entrée 9 et à la sortie de signal 21, le signal émanant de la sortie de signal 22 est conduit via le commutateur "essuie-glace éteints" puis le commutateur "feux éteints" à l'entrée 9.

Le couple entrée/sortie de signal 9, 22 correspondant au commutateur "régulateur de vitesse marche/arrêt" ("cruise on/off"), le système interprétera le signal reçu comme une fermeture dudit commutateur "régulateur de vitesse marche/arrêt" sans que celui-ci ait été actionné.

Afin de pallier à ce défaut, qui entraîne un risque sécuritaire, il est connu d'implémenter dans le circuit de commutation des éléments électroniques supplémentaires. Le document WO 2010/00859, comme on le voit sur la figure 3, divulgue l'utilisation d'un tel montage avec des diodes, indexées 23. Ces diodes empêchent le retour du signal sur une autre ligne après avoir passé un commutateur. Cependant ces composants contribuent à augmenter le coût du dispositif.

L'invention se propose de garder l'avantage du grand nombre de commutateurs dont l'état est accessible au microcontrôleur pour un nombre d'entrées/sorties de signal donné qu'offre le montage numérique matriciel, tout en en améliorant l'aspect sécuritaire sans cependant implémenter de composants électroniques coûteux.

À cet effet l'invention a pour objet un dispositif de commutation pour haut de colonne de véhicule automobile comportant un microcontrôleur, caractérisé en ce qu'il comprend au moins deux blocs fonctionnels de commutation distincts, chaque bloc étant relié à deux entrées de signal et deux sorties de signal du microcontrôleur dont une sortie de signal ou une entrée de signal est reliée uniquement à un seul bloc fonctionnel et chaque bloc fonctionnel comprenant quatre commutateurs, chaque commutateur étant relié à un couple entrée/sortie de signal du microcontrôleur distinct de celui des trois autres du même bloc, en ce qu'au moins deux blocs fonctionnels distincts de commutation partagent uniquement soit une sortie, soit une entrée de signal du microcontrôleur, et en ce que le microcontrôleur est configuré pour déduire d'un signal envoyé par au moins une sortie de signal ayant transité par au moins un bloc fonctionnel de commutation et reçu à au moins une entrée de signal, l'état de commutation d'au moins un commutateur d'un bloc fonctionnel de commutation.

De cette façon, on préserve le grand nombre de commutateurs dont l'état est accessible au microcontrôleur, tout en réduisant le nombre de pistes et le risque de mauvaise interprétation de l'état de commutation du dispositif sans avoir à implémenter de composant électronique supplémentaire.

En outre le dispositif peut présenter une ou plusieurs caractéristiques parmi celles qui suivent.

Le microcontrôleur est configuré pour détecter le signal envoyé par une sortie de signal reliée uniquement à un bloc fonctionnel de commutation à une entrée de signal qui n'est pas reliée audit bloc fonctionnel de commutation, et pour émettre un message comportant un identifiant du bloc auquel est relié la sortie de signal.

Chaque bloc fonctionnel de commutation est associé à un module de commutation pouvant prendre un état de commutation en fonction de la position de commande appliquée par un utilisateur.

Les commutateurs associés à un module de commutation comportent des éléments de contactage et la position de commande appliquée par l'utilisateur définisse une combinaison de contacts permettant de définir une information numérique correspondant à un état de commutation en entrée de signal du microcontrôleur.

Un bloc fonctionnel de commutation contrôle le basculement des feux du véhicule entre les positions éteints, codes, feux de route et pleins phares, et un autre contrôle les feux de brouillard ainsi qu'un klaxon du véhicule.

Le microcontrôleur est configuré pour déterminer l'état de commutation des blocs fonctionnels de commutation en envoyant séquentiellement des trains de signaux périodiques sur chacune de ses sorties de signal.

Les signaux émis sur chacune des deux sorties de signal du microcontrôleur reliées à un même bloc sont déphasés et émis simultanément.

Les impulsions d'un train durent quelques nano ou micro secondes, et la période des trains est de quelques millisecondes.

Le courant auquel les signaux correspondent est de quelques milliampères.

L'invention a aussi pour objet un ensemble de commande pour haut de colonne de direction de véhicule automobile comportant un dispositif de commutation tel que défini ci-dessus.

D'autres caractéristiques et avantages de l'invention apparaîtront plus clairement à la lecture de la description suivante, donnée à titre d'exemple illustratif et non limitatif et des dessins annexés parmi lesquels :
- la figure 1 est un schéma de connexion d'un dispositif selon l'invention;
- la figure 2 est un graphe des signaux aux sorties de signal du microcontrôleur dans un mode de réalisation du dispositif avec en abscisse le temps et en ordonnée la tension délivrée;
- la figure 3 représente un cas de figure du schéma de la figure 1 où le commutateur 13 est, suite à une défaillance, bloqué en position fermée, et où le commutateur 11 est fermé;
- la figure 4 représente le signal arrivant aux entrées de signal du microcontrôleur dans la configuration de la figure 3 en fonction de la fermeture de l'un des commutateur du bloc fonctionnel intact.
- la figure 5 est un schéma de connexion d'un mode alternatif d'un dispositif selon l'invention;

Sur toutes les figures, les mêmes éléments portent les mêmes numéros de référence.

L'invention concerne un dispositif de commutation pour haut de colonne de direction de véhicule automobile.

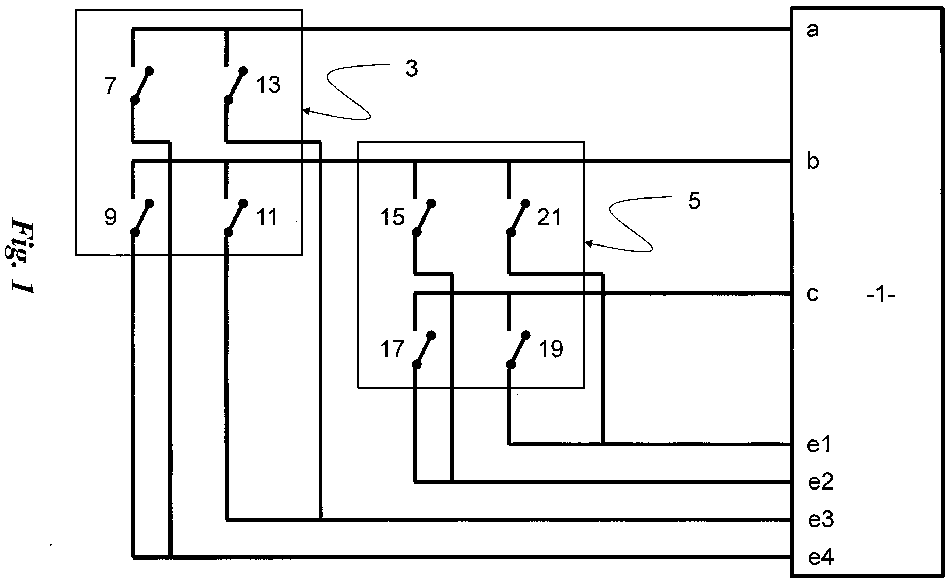

Sur la figure 1 est représenté de manière schématique un montage correspondant à un dispositif de commutation pour haut de colonne de direction de véhicule automobile selon l'invention.

Ledit dispositif comporte un microcontrôleur 1 pourvu de plusieurs sorties de signal a, b, c, et de plusieurs entrées de signal e1, e2, e3, e4. Les sorties de signal a, b, c et les entrées de signal e1, e2, e3, e4 du microcontrôleur 1 sont reliées à au moins deux blocs fonctionnels de commutation 3, 5 distincts.

Les sorties a, b, c de signal sont des connexions du microcontrôleur 1 prévues pour délivrer pendant un laps de temps prédéterminé une tension électrique correspondant à un signal. Les entrées e1, e2, e3, e4 sont des connexions du microcontrôleur 1 prévues pour mesurer la tension électrique qu'on leur applique et pour transmettre la valeur de tension au microcontrôleur 1.

Le premier bloc fonctionnel 3 de commutation est relié d'une part aux entrées de signal e3, e4 et d'autre part aux sorties a, b de signal du microcontrôleur 1. Le second bloc fonctionnel 5 de commutation est relié d'une part aux entrées de signal e1, e2 et d'autre part aux sorties b, c de signal du microcontrôleur 1.

Ainsi, chaque bloc fonctionnel 3, 5 de commutation est relié à deux entrées e1, e2, e3, e4 de signal et à deux sorties a, b, c de signal du microcontrôleur 1. De plus, lesdits blocs fonctionnels distincts 3 et 5 ne partagent que l'unique sortie de signal b, et aucune entrée e1, e2, e3, e4 de signal. Chaque bloc fonctionnel 3, 5 a donc une sortie a ou c de signal qui est reliée exclusivement à lui.

Chaque bloc fonctionnel comporte quatre commutateurs, le premier bloc 3 comporte les commutateurs 7, 9, 11, et 13, et le second bloc comporte les commutateurs 15, 17, 19, 21. Chaque commutateur est relié à une entrée de signal e1, e2, e3, e4 et à une sortie de signal a, b, c du microcontrôleur 1.

Dans le premier bloc 3, l'interrupteur 7 est relié à la sortie a et à l'entrée e4, l'interrupteur 9 est relié à la sortie b et à l'entrée e4, l'interrupteur 11 est relié à la sortie b et à l'entrée e3, et l'interrupteur 13 est relié à la sortie a et à l'entrée e3.

Dans le second bloc 5, l'interrupteur 15 est relié à la sortie b et à l'entrée e2, l'interrupteur 17 est relié à la sortie c et à l'entrée e2, l'interrupteur 19 est relié à la sortie c et à l'entrée e1, et l'interrupteur 21 est relié à la sortie b et à l'entrée e1.

On remarque donc que dans chaque bloc fonctionnel 3 ou 5, chacun des commutateurs 7, 9, 11, 13, 15, 17, 19 et 21 est relié à un couple entrée/sortie de signal différent de celui des trois autres du même bloc 3 ou 5.

Le microcontrôleur 1 est configuré pour déduire d'un signal envoyé par au moins une sortie de signal a, b, c ayant transité par au moins un bloc fonctionnel 3, 5 de commutation et reçu à au moins une entrée de signal e1, e2, e3, e4, l'état de commutation d'au moins un commutateur d'un bloc fonctionnel 3, 5 de commutation.

Les couples entrée/sortie de signal e1/a et e2/a pour les entrées reliées au premier bloc fonctionnel 3 auquel n'est pas relié la sortie de signal, et e3/c et e4/c pour les entrées reliées au second bloc fonctionnel 5, ne correspondent à aucun commutateur. Le microcontrôleur 1 est ainsi programmé qu'il détecte l'arrivée du signal de la sortie a aux entrées e1 et e2, et le signal de la sortie c aux entrées e3 et e4, et les interprète comme signe d'une défaillance. Il envoie alors un identifiant du bloc fonctionnel 3, 5 auquel est relié la sortie a ou c dont le signal a été reçu à une entrée de signal e1, e2, e3, e4 à laquelle ladite entrée a ou c n'est pas reliée via un commutateur 7, 9, 11, 13, 15, 17, 19, 21.

Chaque bloc fonctionnel 3, 5 de commutation est associé à un module de commutation pouvant prendre un état de commutation en fonction de la position de commande appliquée par l'utilisateur.

Les commutateurs 7, 9, 11, 13, 15, 17, 19, 21 associés à un module de commutation 3, 5 comportent des éléments de contactage, et la position de commande appliquée par l'utilisateur définit une combinaison de contacts permettant de définir une information numérique correspondant à un état de commutation en entrée du microcontrôleur 1.

Un des blocs fonctionnels 3, 5 peut, par exemple, contrôler le basculement des feux du véhicule entre les positions éteints, codes, feux de route et pleins phares, et un autre contrôler les feux de brouillard ainsi qu'un klaxon du véhicule.

Le microcontrôleur 1 est configuré de sorte à envoyer séquentiellement des trains de signaux périodiques sur chacune de ses sorties de signal a, b, c, afin de déterminer l'état de commutation des blocs fonctionnels 3, 5 de commutation.

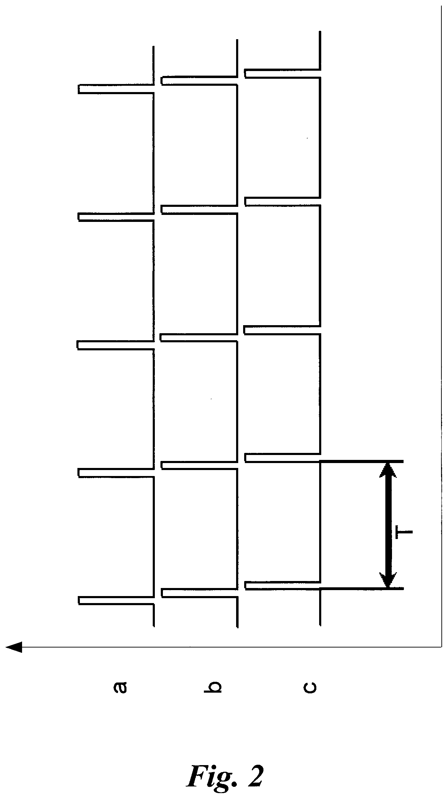

La figure 2 est un graphe représentant le signal émanant des sorties a, b, c en fonction du temps dans le dispositif de la figure 1.

Sur les deux sorties de signal a, b ou b, c reliées à un même bloc fonctionnel 3, 5, les signaux périodiques sont déphasés et émis simultanément, afin d'accélérer le processus de détermination de l'état de commutation de chaque bloc fonctionnel.

Les signaux émanant de chacune des sorties de signal du microcontrôleur 1 sont des trains d'impulsions en forme de créneaux, afin que les signaux déphasés aient un produit rigoureusement nul. Il est prévu dans le présent mode de réalisation que les impulsions d'un train durent quelques nano ou micro secondes, que la période T des trains soit de quelques millisecondes, et que le courant auquel les signaux correspondent soit de quelques milliampères.

En fonctionnement, le microcontrôleur 1 envoie les signaux tour à tour sur les sorties de signal a, b, c associées aux différents blocs fonctionnels 3, 5. Sur les deux sorties a, b ou b, c reliées à un même bloc fonctionnel 3, 5 l'émission a lieu de manière simultanée avec deux signaux déphasés.

Ces signaux arrivent aux blocs fonctionnels dont l'état de commutation correspond à la position de l'organe de commande appliquée par l'utilisateur, et définit une combinaison de contacts avec les éléments de contactage des commutateurs 7, 9, 11, 13, 15, 17, 19,21.

Ladite combinaison de contacts redirige tout ou partie desdits signaux vers les entrées de signal e1, e2, e3, e4 où ils sont reçus et analysés par le microcontrôleur 1 afin d'adapter la réponse des équipements du véhicule.

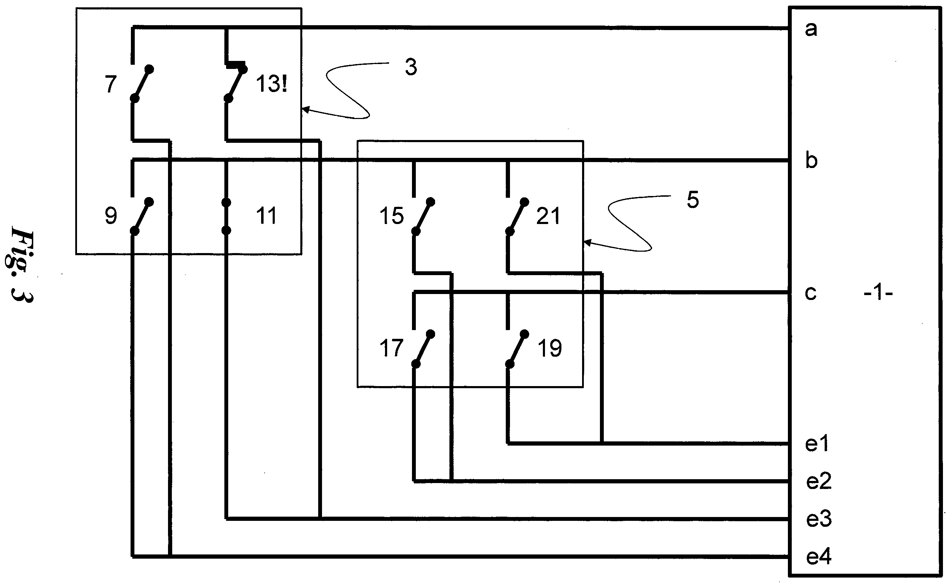

La figure 3 illustre un cas de défaillance possible du dispositif de commutation de la figure 1. Sur ce schéma est figuré le cas où le commutateur 13 est bloqué en condition fermée. Ce cas de figure peut par exemple résulter d'une déformation mécanique des contacteurs électriques dudit commutateur ou bien suite à l'accumulation de poussières conductrices.

L'utilisateur ferme alors simultanément le commutateur 11 du premier bloc fonctionnel 3 où se trouve le commutateur défectueux 13 et un des commutateurs 15, 17, 19, 21 de l'autre bloc fonctionnel 5.

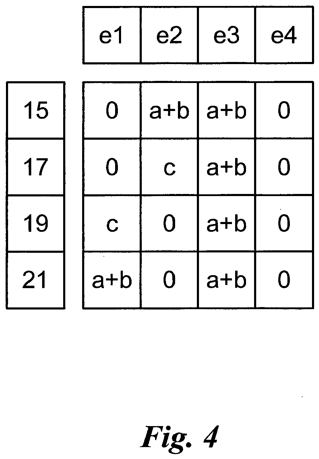

La figure 4 est un tableau représentant la répartition aux entrées de signal e1, e2, e3, e4 du microcontrôleur 1 des signaux émanant des sorties de signal a, b, c du microcontrôleur 1, dans le cas de défaillance de la figure 3 et en fonction du commutateur 15, 17, 19, 21 du bloc 5 non défectueux que ferme l'utilisateur.

Dans ce tableau chacune des quatre colonnes correspond à une des entrées de signal e1, e2, e3, e4 et il y figure le signal que reçoit ladite entrée en fonction de l'état du commutateur 15, 17, 19, 21 du second bloc fonctionnel 5 que ferme l'utilisateur. Par exemple, si l'utilisateur ferme le commutateur 17, ce qui correspond à la deuxième ligne, l'entrée e1 ne reçoit aucun signal, l'entrée e2 reçoit le signal émanant de la sortie c, l'entrée e3 reçoit la somme des signaux émanant de la sortie a et de la sortie b, et l'entrée 4 ne reçoit aucun signal.

En particulier, lorsque l'utilisateur ferme le commutateur 15, l'entrée de signal e2 reçoit les signaux des sorties de signal a et b. Lorsque le commutateur 21 est fermé, l'entrée de signal e1 reçoit les signaux des sorties de signal a et b.

Les couples entrée/sortie de signal e2/a et e1/a ne correspondent à aucun des commutateurs du montage. Aussi pour l'interprétation des états de commutation des blocs fonctionnels 3, 5, le signal émanant de la sortie de signal a et reçu à l'une des deux entrées de signal e1, e2, n'est pas pris en compte et ne mène pas à une interprétation erronée desdits états de commutation.

En cas de défaillance de l'un des commutateurs 7, 9, 11, 13, 15, 17, 19, 21 d'un bloc fonctionnel 3, 5, la réponse des équipements du véhicule est erronée uniquement pour les équipements associés à la fonction que contrôle le bloc fonctionnel 3 contenant le commutateur défectueux 13.

De plus, le microcontrôleur 1 détecte le signal envoyé par une sortie de signal a, c reliée uniquement à un bloc fonctionnel 3, 5 de commutation, à une entrée de signal e1, e2, e3, e4 qui n'est pas reliée audit bloc fonctionnel 3, 5 de commutation. Il émet un message comportant un identifiant du bloc 3, 5 auquel est relié la sortie de signal a, c dans lequel se trouve le commutateur défectueux.

De la sorte, l'utilisateur est informé par ce message que l'un des commutateurs 7, 9, 11, 13, 15, 17, 19, 21 fait défaut, et est même informé de l'identité du bloc fonctionnel 3 de commutation dans lequel se trouve le commutateur défectueux 13. L'utilisateur peut donc en cas de défaillance veiller au remplacement du bloc fonctionnel 3 de commutation défectueux rapidement et de manière ciblée.

L'invention permet donc une amélioration en terme de sécurité en isolant les erreurs à la fonction dont le bloc fonctionnel 3, 5 comporte un commutateur défectueux, et réalise une fonction diagnostic en informant l'utilisateur à la fois de la présence et de la position d'une erreur de contactage dans les blocs fonctionnels 3, 5.

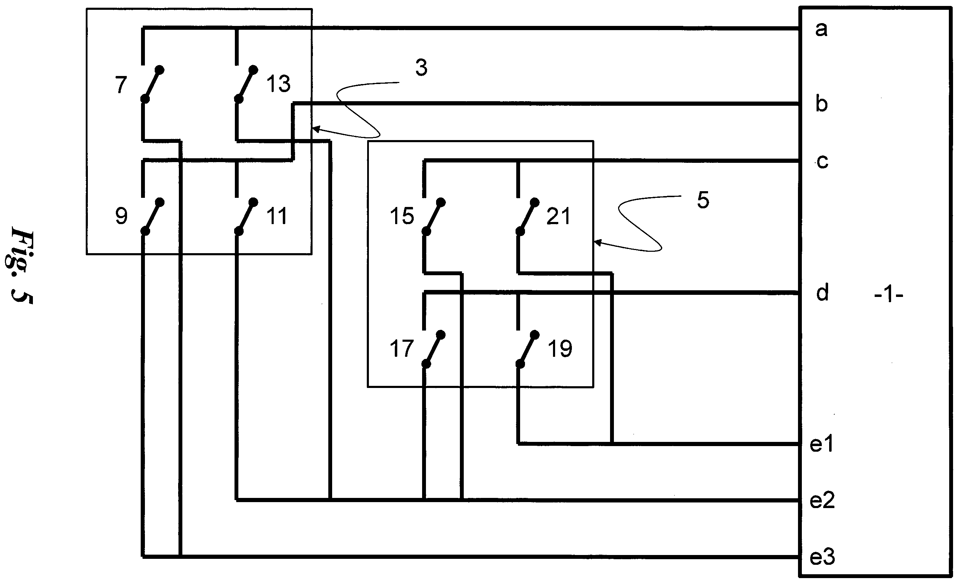

Un mode de réalisation alternatif équivalent est représenté sur la figure 5. Il prévoit que le microcontrôleur 1 comporte trois entrées de signal e1, e2, e3, et quatre sorties de signal a, b, c, d. Les blocs fonctionnels 3, 5 partagent alors une unique entrée de signal e2 et aucune sortie de signal a, b, c, d, et chaque bloc fonctionnel 3, 5 a une entrée de signal e1, e3 reliée exclusivement à lui.

Son fonctionnement est analogue au mode de réalisation décrit ci-dessus. Sur les douze couples entrée/sortie de signal disponible, huit servent via un des commutateurs 7, 9, 11, 13, 15, 17, 19, 21 à définir un état de commutation associé à une fonction d'un des blocs fonctionnels 3, 5, et quatre servent à la fonction diagnostic.

À cet effet, la détection du signal émanant de l'une des sorties a, b sur l'entrée de signal e3, et la détection du signal émanant de l'une des sorties c, d sur l'entrée de signal e1 déclenche l'émission d'un signal comportant un identifiant du bloc 3, 5 auquel est relié l'entrée de signal e1 ou e3 dans lequel se trouve le commutateur défectueux.

## Revendications

1. Dispositif de commutation pour haut de colonne de véhicule automobile comportant un microcontrôleur (1), **caractérisé en ce qu'**il comprend au moins deux blocs fonctionnels (3, 5) de commutation distincts, chaque bloc étant relié à deux entrées de signal (e1, e2, e3, e4) et deux sorties de signal (a, b, c) du microcontrôleur (1) dont une sortie de signal (a, b, c) ou une entrée de signal (e1, e2, e3, e4) est reliée uniquement à un seul bloc fonctionnel (3, 5) et chaque bloc fonctionnel (3, 5) comprenant quatre commutateurs (7, 9, 11, 13, 15, 17, 19, 21), chaque commutateur (7, 9, 11, 13, 15, 17, 19, 21) étant relié à un couple entrée/sortie de signal du microcontrôleur (1) distinct de celui des trois autres du même bloc (3, 5), **en ce qu'**au moins deux blocs fonctionnels (3, 5) distincts de commutation partagent uniquement soit une sortie (a, b, c), soit une entrée de signal (e1, e2, e3, e4) du microcontrôleur (1), et **en ce que** le microcontrôleur (1) est configuré pour déduire d'un signal envoyé par au moins une sortie de signal (a, b, c) ayant transité par au moins un bloc fonctionnel (3, 5) de commutation et reçu à au moins une entrée de signal (e1, e2, e3, e4), l'état de commutation d'au moins un commutateur (7, 9, 11, 13, 15, 17, 19, 21) d'un bloc fonctionnel (3, 5) de commutation.

2. Dispositif de commutation selon la revendication 1, **caractérisé en ce que** le microcontrôleur (1) est configuré pour détecter le signal envoyé par une sortie de signal (a, c) reliée uniquement à un bloc fonctionnel (3, 5) de commutation à une entrée de signal (e1, e2, e3, e4) qui n'est pas reliée audit bloc fonctionnel (3, 5) de commutation, et pour émettre un message comportant un identifiant du bloc (3, 5) auquel est relié la sortie de signal (a, c).

3. Dispositif de commutation selon la revendication 1 ou 2, **caractérisé en ce que** chaque bloc fonctionnel (3, 5) de commutation est associé à un module de commutation pouvant prendre un état de commutation en fonction de la position de commande appliquée par un utilisateur.

4. Dispositif de commutation selon la revendication 3, **caractérisé en ce que** les commutateurs (7, 9, 11, 13, 15, 17, 19, 21) associés à un module de commutation comportent des éléments de contactage et **en ce que** la position de commande appliquée par l'utilisateur définisse une combinaison de contacts permettant de définir une information numérique correspondant à un état de commutation en entrée de signal du microcontrôleur.

5. Dispositif de commutation selon la revendication 4, **caractérisé en ce qu'**un bloc fonctionnel (3, 5) de commutation contrôle le basculement des feux du véhicule entre les positions éteints, codes, feux de route et pleins phares, et un autre contrôle les feux de brouillard ainsi qu'un klaxon du véhicule.

6. Dispositif de commutation selon l'une des revendications précédentes, **caractérisé en ce que** le microcontrôleur (1) est configuré pour déterminer l'état de commutation des blocs fonctionnels (3, 5) de commutation en envoyant séquentiellement des trains de signaux périodiques sur chacune de ses sorties de signal.

7. Dispositif de commutation selon la revendication 6, **caractérisé en ce que** les signaux émis sur chacune des deux sorties de signal (a, b c) du microcontrôleur (1) reliées à un même bloc sont déphasés et émis simultanément.

8. Dispositif de commutation selon la revendication 6 ou 7, **caractérisé en ce que** les signaux émanant des sorties de signal du microcontrôleur (1) sont des trains d'impulsions en forme de créneaux.

9. Dispositif de commutation selon la revendication 6, 7 ou 8, **caractérisé en ce que** les signaux émanant des sorties de signal du microcontrôleur (1) sont des trains d'impulsions de période égale à 30 ns.

10. Dispositif de commutation selon l'une des revendications 4 à 7, **caractérisé en ce que** les signaux émanant des sorties de signal du microcontrôleur correspondent à un courant de 10 mA.

11. Ensemble de commande pour haut de colonne de direction de véhicule automobile comportant un dispositif de commutation selon l'une des revendications précédentes.

## Patentansprüche

1. Schaltvorrichtung für das obere Ende einer Kraftfahrzeugsäule, umfassend einen Mikrocontroller (1), **dadurch gekennzeichnet, dass** sie mindestens zwei separate Schaltfunktionsblöcke (3, 5) umfasst, wobei jeder Block mit zwei Signaleingängen (e1, e2, e3, e4) und zwei Signalausgängen (a, b, c) des Mikrocontrollers (1) verbunden ist, wovon ein Signalausgang (a, b, c) oder ein Signaleingang (e1, e2, e3, e4) nur mit einem einzigen Funktionsblock (3, 5) verbunden ist, und wobei jeder Funktionsblock (3, 5) vier Schalter (7, 9, 11, 13, 15, 17, 19, 21) umfasst, wobei jeder Schalter (7, 9, 11, 13, 15, 17, 19, 21) mit einem Signalein gangs-/Signalausgangspaar des Mikrocontrollers (1) verbunden ist, das von dem der drei anderen des gleichen Blocks (3, 5) verschieden ist, dadurch, dass sich mindestens zwei separate Schaltfunktionsblöcke (3, 5) nur entweder einen Signalausgang (a, b, c) oder einen Signaleingang (e1, e2, e3, e4) des Mikrocontrollers (1) teilen, und dadurch, dass der Mikrocontroller (1) dazu ausgebildet ist, aus einem Signal, das von mindestens einem Signalausgang (a, b, c) geschickt wird, das durch mindestens einen Schaltfunktionsblock (3, 5) übertragen und an mindestens einem Signaleingang (e1, e2, e3, e4) empfangen worden ist, den Schaltzustand mindestens eines Schalters (7, 9, 11, 13, 15, 17, 19, 21) eines Schaltfunktionsblocks (3, 5) abzuleiten.

2. Schaltvorrichtung nach Anspruch 1, **dadurch gekennzeichnet, dass** der Mikrocontroller (1) dazu ausgebildet ist, das Signal zu erfassen, das von einem Signalausgang (a, c), der nur mit einem Schaltfunktionsblock (3, 5) verbunden ist, an einen Signaleingang (e1, e2, e3, e4) gesendet worden ist, der nicht mit dem Schaltfunktionsblock (3, 5) verbunden ist, und eine Nachricht zu senden, die eine Kennung des Blocks (3, 5) umfasst, mit dem der Signalausgang (a, c) verbunden ist.

3. Schaltvorrichtung nach Anspruch 1 oder 2, **dadurch gekennzeichnet, dass** jeder Schaltfunktionsblock (3, 5) einem Schaltmodul zugeordnet ist, das einen Schaltzustand in Abhängigkeit von der von einem Benutzer angewendeten Steuerposition einnchmen kann.

4. Schaltvorrichtung nach Anspruch 3, **dadurch gekennzeichnet, dass** die Schalter (7, 9, 11, 13, 15, 17, 19, 21), die einem Schaltmodul zugeordnet sind, Kontaktierungselemente umfassen, und dadurch, dass die von dem Benutzer angewendete Steuerposition eine Kombination von Kontakten definiert, die es ermöglicht, eine digitale Information zu definieren, die einem Schaltzustand am Signaleingang des Mikrocontrollers entspricht.

5. Schaltvorrichtung nach Anspruch 4, **dadurch gekennzeichnet, dass** ein Schaltfunktionsblock (3, 5) das Schalten von Scheinwerfern des Fahrzeugs zwischen den Positionen Aus, Seitenlicht, Abblendlicht und Fernlicht steuert und ein weiterer die Nebelscheinwerfer und eine Hupe des Fahrzeugs steuert.

6. Schaltvorrichtung nach einem der vorhergehenden Ansprüche, **dadurch gekennzeichnet, dass** der Mikrocontroller (1) dazu ausgebildet ist, den Schaltzustand der Schaltfunktionsblöcke (3, 5) zu bestimmen, indem nacheinander periodische Signalfolgen über jeden seiner Signalausgänge geschickt werden.

7. Schaltvorrichtung nach Anspruch 6, **dadurch gekennzeichnet, dass** die Signale, die über jeden der beiden mit demselben Block verbundenen Signalausgänge (a, b, c) des Mikrocontrollers (1) gesendet werden, phasenverschoben sind und gleichzeitig gesendet werden.

8. Schaltvorrichtung nach Anspruch 6 oder 7, **dadurch gekennzeichnet, dass** die Signale, die von den Signalausgängen des Mikrocontrollers (1) ausgehen, rechteckförmige Impulsfolgen sind.

9. Schaltvorrichtung nach Anspruch 6, 7 oder 8, **dadurch gekennzeichnet, dass** die Signale, die von den Signalausgängen des Mikrocontrollers (1) ausgehen, Impulsfolgen mit einer Periode gleich 30 ns sind.

10. Schaltvorrichtung nach einem der Ansprüche 4 bis 7, **dadurch gekennzeichnet, dass** die Signale, die von den Signalausgängen des Mikrocontrollers ausgehen, einem Strom von 10 mA entsprechen.

11. Steuerungsanordnung für das obere Ende einer Kraftfahrzeuglenksäule, umfassend eine Schaltvorrichtung nach einem der vorhergehenden Ansprüche.

## Claims

1. Switching device for the top-end of a motor vehicle column comprising a microcontroller (1), **characterized in that** it comprises at least two separate switching functional blocks (3, 5), each block being connected to two signal inputs (e1, e2, e3, e4) and two signal outputs (a, b, c) of the microcontroller (1) one signal output (a, b, c) or one signal input (e1, e2, e3, e4) of which is only connected to a single functional block (3, 5) and each functional block (3, 5) comprising four switches (7, 9, 11, 13, 15, 17, 19, 21), each switch (7, 9, 11, 1 3, 15, 17, 19, 21) being connected to a signal input/output pair of the microcontroller (1) separate from that of the other three of the same block (3, 5), **in that** at least two separate switching functional blocks (3, 5) only share either one output (a, b, c), or one signal input (e1, e2, e3, e4) of the microcontroller (1), and **in that** the microcontroller (1) is configured for deducing, from a signal sent by at least one signal output (a, b, c) having transited via at least one switching functional block (3, 5) and received at at least one signal input (e1, e2, e3, e4), the switching state of at least one switch (7, 9, 11, 13, 15, 17, 19, 21) of a switching functional block (3, 5).

2. Switching device according to Claim 1, **characterized in that** the microcontroller (1) is configured for detecting the signal sent by a signal output (a, c) only connected to one switching functional block (3, 5) at a signal input (e1, e2, e3, e4) which is not connected to said switching functional block (3, 5), and for sending a message comprising an identifier of the block (3, 5) to which the signal output (a, c) is connected.

3. Switching device according to Claim 1 or 2, **characterized in that** each switching functional block (3, 5) is associated with a switching module that can take a switching state according to the control position applied by a user.

4. Switching device according to Claim 3, **characterized in that** the switches (7, 9, 11, 13, 15, 17, 19, 21) associated with a switching module comprise contacting elements and **in that** the control position applied by the user defines a combination of contacts allowing digital information corresponding to a switching state to be defined at a signal input of the microcontroller.

5. Switching device according to Claim 4, **characterized in that** a switching functional block (3, 5) controls the switching of the lights of the vehicle between the off, side lights, low-beam and high-beam positions and another controls the fog lights and also a horn of the vehicle.

6. Switching device according to one of the preceding claims, **characterized in that** the microcontroller (1) is configured for determining the switching state of the switching functional blocks (3, 5) by sending trains of periodic signals sequentially over each of its signal outputs.

7. Switching device according to Claim 6, **characterized in that** the signals emitted over each of the two signal outputs (a, b, c) of the microcontroller (1) connected to the same block are phase-shifted and emitted simultaneously.

8. Switching device according to Claim 6 or 7, **characterized in that** the signals emanating from the signal outputs of the microcontroller (1) are pulse trains in the form of a square-wave.

9. Switching device according to Claim 6, 7 or 8, **characterized in that** the signals emanating from the outputs of the microcontroller (1) are pulse trains with a period equal to 30 ns.

10. Switching device according to one of Claims 4 to 7, **characterized in that** the signals emanating from the signal outputs of the microcontroller correspond to a current of a few milliamps.

11. Control assembly for the top-end of a motor vehicle steering column comprising a switching device according to one of the preceding claims.
